# EUROPEAN PATENT SPECIFICATION

(11) **EP 3 723 563 B1**
(45) Date of publication and mention of the grant of the patent: **01.06.2022**
(21) Application number: 18834043.4
(22) Date of filing: 17.12.2018
(51) Int. Cl.: A47J 36/38

(54) **POT FLANGE WITH VAPOUR PASSAGE AND COOKING ASSEMBLY PROVIDED WITH SUCH A FLANGE**
KOCHANORDNUNG ODER TOPFFLANSCH MIT DAMPFDURCHGANG
ENSEMBLE DE CUISSON OU REBORD DE RÉCIPIENT PRÉSENTANT UN PASSAGE DE VAPEUR

(30) Priority: 15.12.2017 BE 201705951
(43) Date of publication of application: 21.10.2020
(73) Proprietor: Berghoff Worldwide NV, 3550 Heusden-Zolder (BE)
(72) Inventor: VANTHOOR, Rafael, 3550 Heusden-Zolder (BE)
(74) Representative: Brantsandpatents bvba
(86) International application number: PCT/IB2018/060166
(87) International publication number: WO 2019/116356

(56) References cited:
- WO-A1-2018/224504
- DE-A1-102008 008 311
- DE-C- 869 121
- FR-A- 683 735
- US-A- 589 727
- US-A1- 2004 250 690

## Description

### TECHNICAL FlELD

The present invention relates to devices for controlling and/or stimulating vapour extraction, for removing cooking vapours.

### BACKGROUND

When heating food products at a cooking unit, mostly, an upward vapour stream generally arises at the cooking unit. For extracting and removing such vapour streams, typically a cooker hood is typically provided above the cooking unit. Disadvantages of such cooker hoods are their large size and their unattractive look. Moreover, a classic cooker hood is an integral part of the fixed kitchen infrastructure. Between two cooking sessions, it can thus not easily be hidden.

Devices for further controlling and/or stimulating the vapour extraction, towards the cooker hood, are in principle well-known in the state of the art. Indeed, GB 2 473 457 B describes a specially designed pot lid with radial edge, for closing off a cooking pot. For vapour to be able to escape from the cooking pot, the edge is provided with a recess.

Moreover, DE 20 2008 012 826 U1 describes a pot lid with vapour outlet, in which that vapour outlet is integrated in a central lid button, and can be controlled by means of this lid button; turning the lid button allows to open or close the vapour outlet.

WO2018224504 A1 discloses an improved extraction device for a worktop which dispenses with any extending, protruding or overhanging extraction device elements. This document discloses multiple embodiments including a redirection body configured to redirect cooking fumes from the rim of the pan towards an extraction opening.

US589727A discloses a device for carrying out the steam or vapor into a stove or range flue. The embodiment disclosed in this document comprises a lid suitable to be attached to a cooking pot, which lid is equipped with a hole and which hole is in fluid connection with the flue of the stove or range by means of multiple tubular sections. Disadvantageously, these devices require a specially designed cooking pot and/or pot lid, as a result of which the existing cooking utensils are no longer useful. Moreover, their design is relatively complex, increasing the production cost.

Apart from that, downdraft extraction systems are becoming increasingly popular, considering o.a. said disadvantages with respect to classic cooker hoods. The actual vapour extraction is thereby no longer provided above the cooking unit, but it is integrated in the cooking unit itself, or it is arranged along or behind the cooking unit.

Often, such systems however appear to be insufficiently powerful for extracting the inherent upward vapour streams sidewards/downwards. US 5 279 279 A tries to offer a solution for this, in the form of a deflector plate that is arranged above the cooking unit. The curved surface of the deflector plate deflects the vapour stream in the direction of the vapour exhaust.

However, just like a cooker hood, such a deflector plate is large and does not look attractive. Moreover, the deflector plate is an integral part of the fixed kitchen infrastructure, which is again not desirable. Also, it contributes only to a small extent to the downdraft/sidedraft extraction of vapour.

Document DE-A-102008008311 discloses a flange according to the preamble of independent claim 1.

The present invention now aims to find a solution for at least some of the above-mentioned problems.

### SUMMARY

Thereto, the invention provides in a first aspect a flange according to claim 1, that is appropriate for being applied on an open circumferential edge of a cooking pot. In particular, the flange comprises a vapour passage. Preferably, the flange is further appropriate for supporting a pot lid. Thus, the cooking pot, the pot lid and the flange can be brought into a closed configuration, in which the flange provides a vapour passage, for extracting vapour, from that closed configuration.

Such flanges can be used in combination with existing cooking pots, with or without a pot lid. They thereby allow for a control of the vapour extraction, in which the improvement/restriction of vapour extraction is influenced by the design of the flange, and in particular by the design of the vapour passage. Such flanges can be used in combination with any extraction system (e.g. updraft, downdraft or sidedraft). Moreover, they can be dimensioned for collaboration with existing cooking pots and pot lids. A very enhanced control of the (degree) of vapour extraction can be obtained by providing a plurality of flanges. Their individual design, as well as the way in which they are combined with a cooking pot (and possibly a pot lid), influences the final vapour extraction. Moreover, a flange with (a) sufficiently large vapour passage(s) allow to freely cook in the environment, with the use of a closed pot lid. Heat is thus better kept inside the pot volume. Other advantages of such flanges are that they are simple in shape, and can thus be produced at low cost. Also, they can be stored, between two cooking sessions.

Said flange is further provided with means for deflecting the vapour passage. Such means is realized in the form of a hood, which hood extends essentially in an inclined, downward direction in order to orient the vapour passage in a particular direction, for example, in the direction of the vapour discharge of the extraction system. In this way, these means support the downdraft extraction system. It is thus possible to make the extraction systems lighter and/or more compact.

In a second aspect, the invention describes an assembly of claim 8, the assembly comprising a cooking pot and/or a pot lid. In particular, the assembly moreover comprises a flange of any one of the claims 1 to 7, which flange preferably is dimensioned according to the cooking pot and the pot lid. The same advantages can be repeated in this context.

A specific embodiment relates to the assembly of claim 9, in which the assembly comprises at least the cooking pot and the flange, which cooking pot and flange thereby form one integral part. The same advantages with respect to the control and/or orientation of the vapour flow can be repeated. However, the design of the assembly is easier, and the assembly consists of less parts.

### DESCRIPTION OF THE FlGURES

**Figure 1** shows a perspective view of a pot flange according to an embodiment of the invention.
**Figure 2** shows an explosive view of an assembly comprising a cooking pot, a pot flange and a pot lid, according to an embodiment of the present invention.
**Figure 3** is a front view of a pot flange according to an embodiment of the present invention.
**Figure 4A** shows a cross-section in front view, of a pot flange according to an embodiment of the invention.
**Figure 4B** shows a detail of the cross-section according to figure 4A.
**Figure 5** shows a perspective view of a pot flange according to another embodiment of the present invention.

### DETAILED DESCRIPTION

The invention relates to a flange, which flange comprises a vapour passage, and is therefore appropriate for being positioned onto an open circumferential edge of a cooking pot. Furthermore, the invention also relates to an assembly comprising a flange, combined with a cooking pot and/or pot lid.

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

When "approximately" is used in the document together with a measurable quantity, a parameter, a period or moment, etc., variations of +/-20% or less, preferably +/-10% or less, more preferably +/-5% or less, still more preferably +/-1% or less, and even still more preferably +/-0.1% or less than and of the cited value are meant, as far as such variations apply to the invention that is described. It will however be clearly understood that the value of the quantity at which the term "approximately" is used, is itself specified.

The terms "include", "including", "consist", "consisting", "provide with", "contain", "containing", "comprise", "comprising" are synonyms and are inclusive of open terms that indicate the presence of what follows, and that do not exclude or prevent the presence of other components, characteristics, elements, members, steps, known from or described in the state of the art.

The terms "vapour(s)" and "cooking effluent(s)", as used throughout this document, are mutually exchangeable terms and should be interpreted broadly. They can amongst other things refer to any cooking effluent, selected from the group comprising water vapour, fat vapour, oil vapour and other vapours and gasses, steam, fumes, hot air, fine water drops, fat drops and/or oil drops in the gas/vapour phase, other spraying substances, powdered substances in the gas/vapour phase and any other mixture thereof. In a further or alternative definition, "vapour(s)" and "cooking effluent(s)" relate to any substantially gaseous mixture that is released when preparing/processing food products, and for which it is desirable that it is extracted by means of vapour extraction.

The terms "vapour extraction" and "extraction system" are mutually exchangeable terms, and refer to systems for extracting vapours when preparing/processing food products by heating them, thus comprising both updraft (e.g. the classic cooker hood), downdraft and sidedraft extraction systems. When desired, it will be further specified if it relates to an updraft, downdraft, or sidedraft extraction system. If not further specified, the term "downdraft extraction system" will moreover relate to extraction systems in a downward and/or sideward direction, analogous with the English terms "downdraft/downdraught systems".

Furthermore, the invention is by no means limited to either cooking or baking. "Cooking", as used throughout the document, should be interpreted as further comprising: cooking, baking, deep-frying, grilling, roasting, poaching, stir-frying, braising, steaming, stewing and any other technique for preparing a food product, in which vapours/cooking effluents could be released.

When referring to a "cooking pot", the latter term can moreover also be changed by a "frying pan", "deep frying pan", "casserole", "stir-frying pan", "steaming pot" and similar. Preferably, the cooking pot comprises a "pot bottom" and a "pot wall", which pot wall extends from the pot bottom in an upward direction up to an open circumferential edge of the cooking pot, also called the "pot edge". This open circumferential edge thereby borders an upwardly directed pot opening. Moreover, "edge" and "edge part" are used here as interchangeable terms. opening. Preferably, the cooking pot is appropriate for being placed on a cooking unit comprising at least one hob (e.g. an electric hob, a gas hob or an induction hob), for heating the content of the cooking pot, from the pot bottom. In a possible embodiment, the pot bottom is essentially a circular disc, in which the pot wall essentially relates to a circular sheath, and in which the pot edge also essentially describes a circle. In another possible embodiment, the pot bottom is essentially an oval disc, in which the pot wall essentially relates to an oval sheath, and in which the pot edge also essentially describes an oval. Of course, the invention is not limited to circular/oval cooking pots; the skilled worker will be able to apply the invention on and/or combine it with a cooking pot of any design, known in the state of the art.

The terms "lid(s)" and "pot lid(s)", as used throughout this document, are mutually exchangeable terms. They refer to lids for closing off pot openings of cooking pots, as known in the state of the art. Typically, the pot lid thereby defines a lid edge that can be placed in, on or over the pot edge, in which the cooking pot and the corresponding pot lid can be brought into a closed configuration. In this closed configuration, they define an (at least partially) closed "pot volume", extending inside the cooking pot and the pot lid. Outside, a "surrounding volume" extends.

The term "vapour passage", as used throughout this document, refers in its largest extent to a path that can be followed by vapour. The presence of a vapour passage thus does not necessarily mean the presence of something that is material/tangible, but rather at least the existence of the possibility of a passage of vapour. A (tangible) object/element/body and similar, that "comprises a vapour passage", is however in such form that the vapour has the possibility to pass for example along or through that object. The corresponding vapour passage then refers to the path that is thereby followed by the vapour. Optionally, this vapour passage can also be determined by o.a. the vapour pressure, vapour pressure gradient and vapour temperature.

When "bending/deflecting the vapour passage", the vapour is forced into a bend; the followed path thereby comprises at least one bend.

The citation of numeric intervals by means of end points includes all integers, fractions and/or real numbers between the end points, including these end points.

In a first aspect, the invention relates to a flange, that is appropriate for being placed onto, in or over an open circumferential edge of a cooking pot. Preferably, the flange is further appropriate for carrying/supporting a corresponding pot lid of the cooking pot. Thus, the cooking pot, the pot lid and the flange can be brought in a closed configuration. The pot lid thereby rests onto the flange, which flange in turn rests onto the cooking pot. In this configuration, they close off an (at least partially) closed pot volume, in the inside, from a surrounding volume, on the outside. The flange now comprises a vapour passage, i.e. the design of the flange is such that, in the closed configuration, the pot flange contributes to the provision of a vapour passage, which preferably extends between that (at least partially) closed-off pot volume and that surrounding volume. Vapour can be led, through that passage, out of the closed configuration of the cooking pot, the flange and the pot lid.

Preferably, the flange comprises an essentially circular body, with a lower flange edge that is appropriate for supporting it onto an upwardly directed pot edge, and with an upper flange edge that is appropriate for supporting a downwardly directed lid edge of a pot lid. The lower flange edge thereby surrounds a lower flange opening, while the upper flange edge surrounds an upper flange opening. Preferably, the flange is one single, integrally connected body, but this is not necessarily the case.

Such flanges can be used in combination with (existing) cooking pots, with or without a corresponding pot lid. They can thereby allow a very simple control of the vapour extraction, by either stimulating, or limiting it. They can be used in combination with any extraction system, and in combination with existing cooking pots and pot lids. A simple example can be given in the cooking and steaming technique; only one flange can thereby be provided in as much as three possible user modes of a cooking pot, the corresponding pot lid and the flange that is dimensioned therefore: (1) free cooking in the environment, in the open cooking pot without a pot lid and without a flange, (2) steaming or cooking under pressure, in the cooking pot, directly closed off with the corresponding pot lid, and (3) cooking in a cooking pot with flange, in turn closed off by means of the pot lid. In the latter user mode, the design of the flange will determine if the method of preparation tends to free cooking, or cooking under pressure or steaming. More in particular, the nature and size of the vapour passage will have an influence on the extend in in which vapour is led out of the closed assembly.

Other advantages of such flanges are that they are simple in shape, and can thus be produced at low cost. They can also be stored easily, between two cooking sessions (both separate and when attached to a cooking pot or pot lid). Optionally, one provides a plurality of flanges that can be used each individually and/or in mutual combination together with an existing cooking pot or pot lid. There are a number of possibilities to control the extent in which vapour is extracted. Each time, the nature/shape of the vapour passages of the individual flanges, and how the flanges have been combined, determines the extent in which vapour is extracted from the cooking assembly.

Moreover, a flange with sufficiently large vapour passage(s) allows to freely cook in the environment (at atmospheric pressure), with the use of a closed pot lid. The vapour is then extracted along said vapour passage(s) out of the pot volume, while the pot lid protects the user from splashing water, oil and similar. Heat is also kept better in the cooking pot. In a traditional cooking assembly, one should thereto place the pot lid in an inclined (and often very unstable) way onto the pot edge. Moreover, the size of the vapour passage between the lid edge and the pot edge can thereby not be controlled precisely, and the pot lid no longer offers a full protection against splashing water, oil and similar. According to the present invention, the vapour passage can for example be controlled by means of the choice of the pot flange.

According to the invention the vapour passage is constituted by one or more vapour passage channels, which channels essentially extend through the flange. Preferably, the flange comprises an essentially annular body comprising an essentially annular flange wall, which flange wall extends between the lower and upper flange edge. For example, the vapour passage channel is realized as an aperture, through the flange wall. At least a section along the path of the vapour passage is thereby surrounded by the structure of the flange.

If the flange wall is sufficiently thick, indeed at the location of the vapour passage channel, that vapour passage channel can extend along a particular direction, and direct the (outgoing) path of the vapour passage in a certain extent. For example, the vapour passage channel extends in an inclined upward direction, and/or defects upwards. This could improve updraft vapour extraction. According to another example, the vapour passage channel extends in an inclined downward direction, and/or deflects downwards. This could improve downdraft/sidedraft vapour extraction. According to another example, the vapour passage channel essentially extends horizontally. This can allow a simpler fabrication, and could moreover improve sidedraft vapour extraction.

The flange can comprise one or more such vapour passages. Individual vapour passages can comprise one or more vapour passage channels. A vapour passage channel can thereby be realized as a pressure hood, vent hole, an open hole, a mesh (e.g. as part of a vapour passage wire mesh) and/or as an isolated perforation, but is in no way limited to one or more of these forms.

According to the invention, the vapour passage channels essentially extends radially through the flange. "Radial" and "on a radial direction", as expressed here, refers to directions extending perpendicularly to a central, vertical axis of the cooking assembly (in particular of the flange), in the horizontal plane. Essentially radially (and moreover possibly upward/horizontal/downward) oriented vapour passage channels allow for a sidedraft extraction of vapour, through the pot flange. Typically, the pot flange is closed off at the top by means of a lid, for better keeping it warm, and for preventing splashing of o.a. water, oil and fat.

Radially oriented vapour passage channels can be easily obtained, for example by punching or drilling in the flange wall, or by keeping the channel free when pouring.

According to the invention, a plurality of vapour passage channels is grouped into a vapour passage zone. The flange can comprise one or more such vapour passage zones. For example, they are distributed symmetrically along the circumference of the flange. It is also possible that the flange comprises one or more upper vapour passage zones, that are distributed over 360° along the whole circumference of the flange, for example for collaboration with a downdraft extraction system that is integrated along the circumference of a cooking plate.

Optionally, the surroundings of handles are kept free for vapour passage channels, considering the risk of burning.

Preferably, the flange comprises one vapour passage zone, that spans only a sector, for example maximum a quarter of the circumference of the flange. The flange can then be used for orienting the vapour flow from one vapour discharge, for example to a downdraft vapour discharge that is provided centrally in the cooking unit, or to a sidedraft vapour discharge that is provided along the back side above the cooking unit.

Alternatively, a vapour passage zone comprises only one, two, three of more relatively large vapour passage channels. The fact that the vapour passage zones comprise a plurality of small vapour passage channels, has the advantage that upward/sideward splashing fluids (e.g. oil or water) will gush less easily through the vapour passage zone to the outside. Optionally, such a vapour passage zone forms an ordered mesh with ribs, which is sturdier than one or a small number of large vapour passage channels with the same effective vapour passage. As a result, it becomes possible to realize the flange in flexible and/or less sturdy materials. The flange for example comprises silicone.

According to an embodiment which does not fall within the scope of the claims, the vapour passage channels within one zone do not extend radially, but rather parallel to each other. They can thereby be oriented in a downward, a sideward, an essentially horizontal and/or an upward direction. Such vapour passage channels lead to a vapour passage that is largely directed.

According to a further or alternative embodiment, the vapour passage channels have a diameter of minimum 0.2 mm, and maximum 12 mm, more preferably more than 0.5 mm, more preferably less than 10 mm, more preferably less than 8 mm, more preferably less than 6 mm, more preferably more than 1 mm. It now appears that upward splashing water and oil gushes less quickly through such relatively small openings towards the outside. Moreover, they can offer sufficient vapour passage, in particular in case a plurality of such vapour passage channels is grouped into a vapour passage zone. Preferably, the vapour passage zone thereby has an ordered structure; for example, the channels are ordered according to a square, rectangular or hexagonal grid. Such a mesh offers more strength to the vapour passage zone, so that the flange wall can be made thinner, and/or so that flexible and/or less robust materials can be used. Another advantage of such relatively small vapour passage channels is that they can offer more resistance to vapour, as a result of which, in use, a substantial pressure drop arises, along the length of the vapour passage channel. In this way, vapour gushes with a substantial speed out of the channels, as a result of which the vapour stream can be better oriented.

According to the invention, the flange comprises means for deflecting the vapour passage. Such means allow to deflect the vapour passage in a particular direction, for example in the direction of the vapour discharge of the extraction system. In this way, these means support the extraction system, regardless if it is an updraft, sidedraft or downdraft extraction system, in which the design of the means (typically a deflector hood, but in no way limited thereto) is adjusted correspondingly. This in turn allows to realize extraction systems that are lighter and/or compacter, e.g. with a lower flow rate. Also, as a result of this, the production and installation cost of the extraction system decreases.

Preferably, the flange comprises means for deflecting the vapour passage in a sideward and/or downward direction. Indeed, it is a known problem of sidedraft and/or downdraft extraction systems, that they are often insufficiently performant. Indeed, hot vapour has the tendency to rise, in homogeneous surrounding air at room temperature (law of Archimedes). The extraction system should thus be more powerful than if it would be about a sidedraft extraction system: on the one hand, for deflecting and extracting a rising vapour stream, on the other hand, for effectively extracting that vapour stream.

According to the invention, the means for deflecting the vapour passage are realized in the form of a hood, which hood comprises a hood base that is provided above the vapour passage channels. Preferably, that hood extends above the outlet of the vapour passage channels, thus in the surrounding volume. Said hood base thereby connects with the radial outside of the flange, and preferably extends, away from the flange. For example, it relates to one hood, that is provided above several, if not all vapour passage channels of a particular vapour passage zone. According to another example, individual hoods have been provided above one or more individual vapour passage channels. Such a hood avoids rising of an outgoing vapour stream, from the vapour passage channels. At least in this sense, the hood thereby supports the downdraft and/or sidedraft vapour extraction. Such a hood also contributes to the safety, as it protects from the stream. Preferably, the hood is marked noticeably, so that it is clear for the user that it relates to a (vapour) hood, and not to a gripping point. This is however not necessarily the case. Preferably, the hood does not extend over the complete circumferential edge, but only above the vapour passage.

According to a further embodiment, the hood is such that it deflects the vapour passage in a downward and/or sideward direction. Thereby, the vapour passage channels are oriented in an upward, horizontal and/or sideward direction, in which a part of the discharged flow is deflected against the hood, in a downward and/or sideward direction.

According to a possible embodiment, the upper flange edge extends radially, so that the pot lid can easily be slid onto it, and/or so that the flange can thereby easily be grasped to take it from the cooking pot. Preferably, the hood is then formed by a local, further overhang of that flange edge, exclusively above the vapour passage zone, and appropriate for deflecting the vapour passage. In an alternative embodiment, the hood is a separate part of the flange, not overlapping with or connecting with said flange edge.

Preferably, the hood extends in a radial direction, and covers as it were a part of the surrounding volume, which covered part is also called the "covered surrounding volume". Preferably, the design of the pot flange is such that, in closed configuration of the cooking pot, the pot lid and the flange the vapour passage channels are oriented towards that covered surrounding volume. More preferably, they extend from the pot volume up to that covered surrounding volume.

According to the invention, said hood extends according to an inclined, downward direction. Such a hood deflects the vapour passage in a downward direction, and thereby supports the operation of sidedraft and/or downdraft extraction systems. According to a further or alternative embodiment, the hood describes an angle that is smaller than 80° and that is preferably situated between 40° and 70°, more preferably between 45° and 65°, more preferably between 50° and 60°, and that is preferably equal to approximately 55° or 56°, or any other value around or between these values. For such angles, it appeared that the discharged vapour flow can be optimally extracted, by means of sidedraft and/or downdraft extraction systems.

According to a further or alternative embodiment, the hood ends into a hood edge part, in which the hood edge part is positioned lower than the hood base. However, between that, the hood can take any shape, in which a partially horizontal and/or upward course of the hood structure is in no way excluded.

According to a further or alternative embodiment, the flange comprises a lower ring part and an upper ring part, each comprising an average inner diameter and an average outer diameter, in which the average outer diameter of the upper ring part is larger than the average outer diameter of the lower ring part. This allows positioning of the flange onto a cooking pot. For example, the outer diameter can be continuous, in which the flange can be placed onto the cooking pot in a conical way. According to another example, the outer diameter is discontinuous, for forming a supporting edge, by means of which supporting edge the flange rests onto the circumferential edge of the cooking pot. The invention is in no way limited to these examples. Preferably, said ring parts are formed integrally, or are in any case connected to each other integrally.

According to a further or alternative embodiment, the upper ring part is configured for resting onto an open circumferential edge of a cooking pot. According to a further or alternative embodiment, the lower ring part is configured for being enclosed by an open circumferential edge of a cooking pot. More preferably, the vapour passage channels extend through the upper ring part of the flange, as the outer side of the lower ring part is typically covered by the pot edge. This is however not necessarily the case.

According to a further or alternative embodiment, the average inner diameter of the upper ring part is larger than or equal to the average outer diameter of the lower ring part. More preferably, the inner diameter at the upper flange edge is larger than or equal to the outer diameter at the lower flange edge. This allows to complement an existing assembly of a cooking pot and corresponding pot lid with a pot flange, that is dimensioned in such way that the downwardly directed lid edge fits into the upwardly directed upper flange edge, and that the downwardly directed lower flange edge fits into the upwardly directed pot edge. This ensures that condensation can be led downwards along the gradual inner side of the assembly, without thereby going out of the assembly.

For example, the average inner diameter of the upper ring part is 0.5 mm to 5.0 mm larger than the average outer diameter of the lower ring part. Preferably, the average outer diameter of the lower ring part is thereby such that the flange is configured for collaboration with standard dimensioned pots and pans. More preferably, this average outer diameter is about 16.0 cm, about 18.0 cm, about 20.0 cm, about 22.0 cm, about 24.0 cm, about 26.0 cm or about 28.0 cm.

According to a further or alternative embodiment, the average outer diameter of the lower ring part is conical. According to a further or alternative embodiment, the average inner diameter of the upper ring part is conical. According to a further or alternative embodiment, the inner surface of the upper ring part and/or the outer surface of the lower ring part has a ribbed structure. "Average diameters" are averaged over these ribs. according to a further or alternative embodiment, the flange at least partially consists of elastic material. According to a further or alternative embodiment, the lower flange edge extends in use within the pot edge, in which mutual sliding in lateral (thus horizontal) direction is not possible.

A possible advantage is that the flange (at correct mutual dimensioning) can be clamped removably, inside the circumferential edge of a cooking pot. This is possible by means of at least partially elastic elements, provided along the outer side of the lower ring part (i.e. rubber clamping) Instead or moreover, the flange is clamped conically, and/or the flange is closed frictionally onto the cooking pot. The cooking pot and flange thereby rather function as one integral part, in which the pot lid can be placed onto the upper edge of the flange, and can be taken off.

According to a further or alternative embodiment, the flange comprises two handles, which handles extend diametrically, and in which said vapour passage extends along a transverse direction, transverse to the diametrical direction of the handles. Optionally, two vapour passages are provided, extending diametrically, in which the diametrical orientation of the vapour passages are orthogonal to the diametrical direction of the handles. Such a design takes into account safety, in particular the risk of burning. Indeed, the handles are placed as far as possible from the vapour passage(s). However, optionally, the vapour passage is integrated in the handle.

In a second aspect, the invention relates to an assembly comprising a cooking pot and/or a pot lid. In particular, the assembly further comprises a flange as described above. Preferably, the flange, the cooking pot and the pot lid are dimensioned accordingly. The flange is thereby appropriate for its application onto the cooking pot and/or under the lid. The same advantages as above can be repeated in this context.

According to a further or alternative embodiment, the assembly comprises at least the cooking pot and the flange, in which the flange does not constitute a separate part, but is made as one integral part together with the cooking pot. The same advantages with respect to the control and/or direction of the vapour flow can be repeated. However, the design is easier, and the assembly consists of less parts. Alternatively, the flange is a separate part, considering the exchangeability and the possibility of the use of the flange combined with existing cooking pots.

In a further aspect, the invention further relates to a method for fabricating a pot flange, which method comprises the following steps:
- rolling of a metal reinforcing structure comprising a lower ring part and an upper ring part, and
- pouring or spraying into said reinforcing structure, of an encapsulating structure comprising silicone,
in which the reinforcing structure comprises at least one passage, and in which the encapsulating structure comprises at least one vapour passage channel at this passage. Preferably, the method is appropriate for fabricating the above-mentioned flange. Preferably, the handles and/or the hood are thereby at least partially made of the encapsulating structure. According to an embodiment, the reinforcing structure has a thickness between 0.50 mm and 1.20 mm, for example about 0.80 mm. according to an embodiment, the reinforcing structure comprises stainless steel.

In the following, the invention will be described by means of non-limiting examples illustrating the invention, and not meant to be interpreted as limiting the scope of the invention.

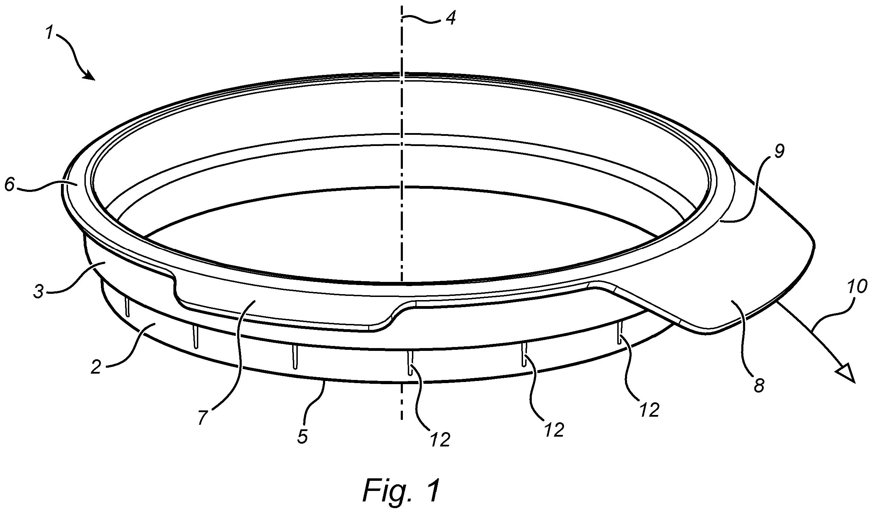

**Figure 1** shows a perspective view of a pot flange **1** according to an embodiment of the invention. The pot flange **1** comprises an essentially annular body comprising a lower ring part **2** and an upper ring part **3.** With respect to the flange **1,** another vertical central axis **4** can be defined. The lower ring part **2** ends up downwards onto a lower flange edge **5,** that surrounds a lower flange opening. The upper ring part **3,** on the other hand, ends up upwards onto the upper flange edge **6,** that surrounds an upper flange opening. The latter, upper flange edge **6** comprises an edge part that overhangs radially, for forming a first and a second handle **7,** of which only the second one is shown in the figure. Both handles **7** extend diametrically, in a horizontal direction transverse to the central axis **4.** Furthermore, said edge part (of the upper flange edge **6)** ends up in a transverse, downward direction (transverse to the diametral direction of the handles **7)** into a hood **8** with hood base **9.** Under this hood **8,** the flange **1** provides a vapour passage **10** comprising one or more vapour passage channels **11** (not shown in the figure). The vapour passage channels **11** can thereby take any form, as has been described in this document. The lower ring part 2 finally comprises radially protruding ribs **12,** for clamping the flange **1** in a pot opening of a cooking pot, inside the open circumferential edge. Optionally, these ribs **12** are made in an elastic/flexible material, for obtaining a rubber clamping.

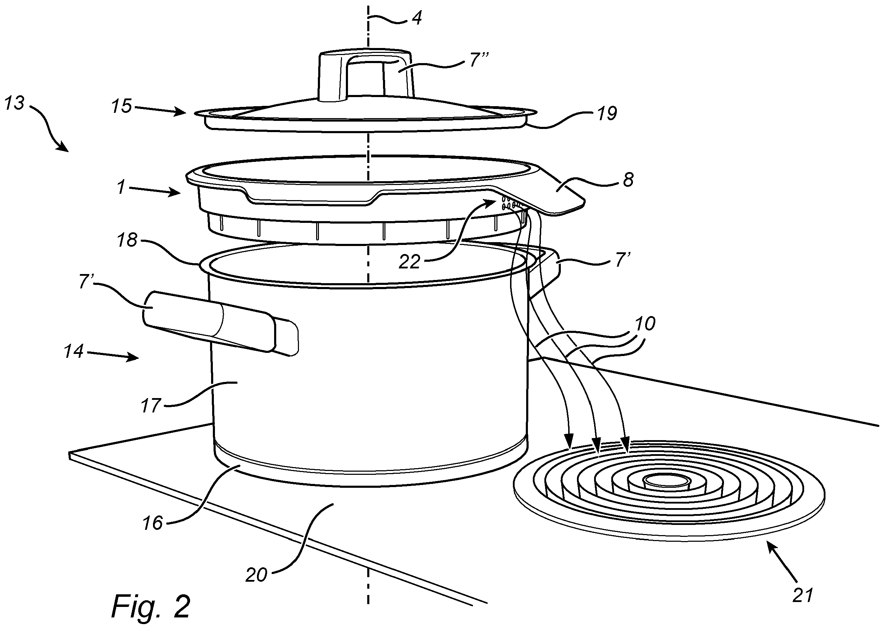

**Figure 2** shows an explosive view of an assembly **13** comprising a cooking pot **14,** a pot flange **1** and a pot lid **15,** according to an embodiment of the present invention. For example, it relates to a pot flange **1** according to an embodiment of figure 1. The cooking pot **14** comprises a pot bottom **16** and a pot wall **17,** which pot wall **17** extends in a vertical direction from the pot bottom **16** up to the pot edge **18.** The cooking pot **14** is further provided with two handles **7'.** The pot lid **15** comprises a downwardly oriented lid edge **19,** and further also a handle **7".** The pot flange **1,** the cooking pot **14** and the pot lid **15** are shown vertically with respect to each other, in which they define a common and vertical, central axis **4.** In closed/operative configuration, the pot flange **1** is lowered onto the cooking pot **14,** and the pot lid **15** is lowered onto the pot flange **1**. Thereby, the assembly **13** defines an at least partially closed-off pot volume.

The assembly is now placed onto a cooking unit **20,** which cooking unit **20** is provided with an extraction system for downdraft vapour extraction. The system thereby comprises a vapour discharge **21** that is integrated in the cooking unit **20.** The flange **1** now comprises a vapour passage **10** extending under the hood **8.** The flange **1** thereto provides a vapour passage zone **22,** allowing vapour to escape from the pot volume towards the surrounding volume. The vapour passage **10** extends radially through the pot flange **1**, and is subsequently deflected downwards against the hood **8.** Thus, the flange **1** contributes to the downward vapour extraction. Moreover, the extent in which vapour is released from the pot volume, is controlled by an appropriate choice of pot flange **1**, with a desired arrangement, shape and size of the vapour passage zone **22.**

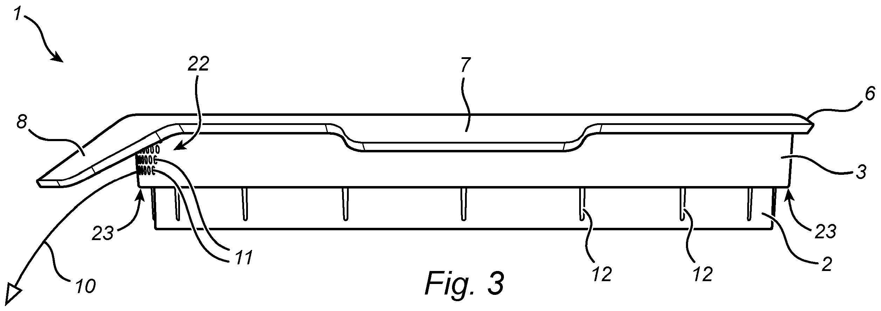

**Figure 3** is a front view of a pot flange **1** according to an embodiment of the present invention. For example, it relates to a flange **1** according to an embodiment of figures 1 and/or 2. Preferably, the front and back view of the flange **1** are identical, except for a horizontal mirror image. In particular, along the back side of the pot flange **1**, such a handle **7** is also provided (not shown in the figure). The handles **7** along the front and back side then extend diametrically, perpendicular to the plane of the figure. The hood **8** and vapour passage **10,** on the other hand, extend in a direction transverse to said diametrical direction, and are situated in the plane of the figure. Such a design reduces the risk of burning of the hands in use, as a result of vapour/steam in the vicinity of the handles **7.** The vapour passage **10** itself is constituted by a vapour passage zone **22** comprising a plurality of vapour passage channels **11**.

Furthermore, the flange **1** also comprises a supporting edge **23**, for supporting it onto the open circumferential edge **18** of a cooking pot **14.** The supporting edge **23** comprises a discontinuity in the outer diameter of the pot flange **1.** In particular, it can also be specified that the average outer diameter of the upper ring part **3** (the overhung, upper flange edge **6** not taken into account) is larger than the average outer diameter of the lower ring part **2.**

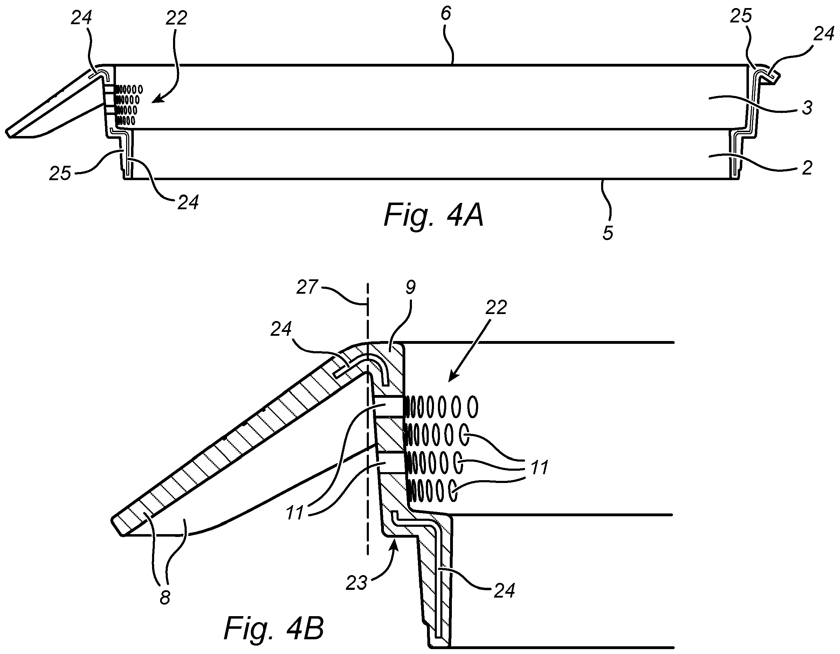

**Figure 4A** shows a cross-section in front view, of a pot flange **1** according to an embodiment of the invention. For example, it relates to a pot flange **1** according to an embodiment of figure 3. The pot flange **1** thereby comprises a lower ring part **2** and an upper ring part **3** with a overhung, upper flange edge **6.** Only in the vicinity of the vapour passage zone **22,** this flange edge further continues up to a hood, for deflecting vapour. The flange **1** is made of a reinforcing structure **24**, which reinforcing structure is encapsulated by means of an encapsulating structure **25.**

As can be seen on the figure, the outer diameter of the lower ring part **2** and the inner diameter of the upper ring part **3** are conical. The average inner diameter of the upper ring part **3** is moreover larger than the average outer diameter of the lower ring part **2.** Moreover, the inner diameter of the upper ring part **3**, at the upper flange edge **6,** is larger than the outer diameter of the lower ring part **2,** at the lower flange edge **5.**

**Figure 4B** shows a detail of the cross-section of figure 4A, at the vapour passage zone **22.** There, the flange **1** is provided with a plurality of vapour passage channels **11**, which channels **11** extend essentially radially through the flange wall. Thus, the flange **1** comprises a vapour passage **10.** The flange **1** is further provided with a hood **8** in an inclined, downward direction, for downwards deflecting of this vapour passage **10.** The hood extends in a downward direction, and thereby describes an angle **26** of approximately 55°, i.e. the inner surface of the (essentially straight) hood encloses an angle of approximately 55° with respect to the vertical direction **27.**

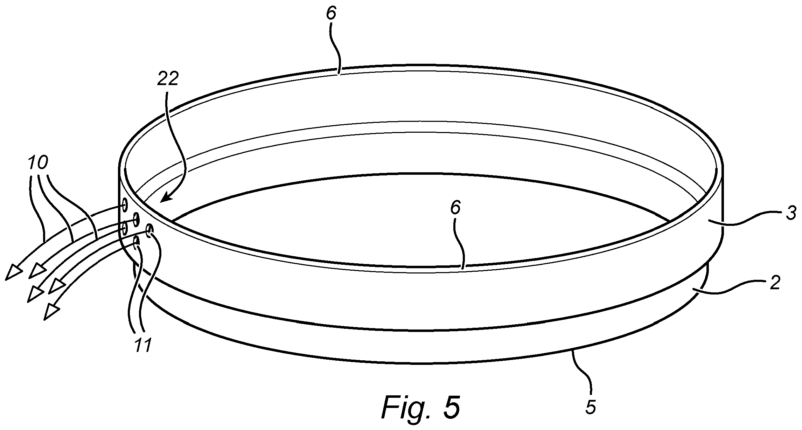

**Figure 5** shows a perspective view of a pot flange **1** according to another embodiment of the present invention. The flange **1** comprises an essentially annular body comprising a lower ring part **2** and an upper ring part **3.** The average outer diameter is smaller at the lower ring part **2** than at the upper ring part **3.** The outer diameter can be continuous or discontinuous, from the lower ring part **2** to the upper ring part **3.** In the downward direction, the lower ring part **2** ends up in a lower flange edge, for supporting it on a cooking pot **14,** an/or for sliding it in a cooking pot **14.** In an upward direction, the upper ring part **2** ends up in an upper flange edge **6,** for supporting a pot lid **15.** The flange **1** is further provided with a vapour passage zone **22** comprising one or more vapour passage channels **11**, and thereby provides a vapour passage **10,** for removing vapour from the assembly of cooking pot **14,** flange **1** and pot lid **15.**

Optionally, the vapour passage channels **11** are oriented in an upward, downward or horizontal direction, for orienting the vapour passage **10.** Optionally, the flange **1** comprises another one or more hoods **8,** for deflecting the vapour passage **10** - not shown in the figure. Optionally, the flange wall constitutes, at the vapour passage zone, a radially bulging overhang, in which the vapour passage channels **11** are provided through this overhang, oriented in a downward direction.

Preferably, the flange **1** is adjusted to the standard dimensions of cooking pots **14** and pot lids **15.** It is thereby appropriate for positioning onto a cooking pot **14** with a pot opening diameter of: 16 cm, 18 cm, 20 cm, 22 cm, 24 cm, 26 cm or 28 cm.

The enumerated elements on the figures are:
1. Flange
2. Lower ring part
3. Upper ring part
4. Central axis
5. Lower flange edge
6. Upper flange edge
7. Handle
8. Hood
9. Hood base
10. Vapour passage
11. Vapour passage channels
12. Ribs
13. Assembly
14. Cooking pot
15. Pot lid
16. Pot bottom
17. Pot wall
18. Pot edge
19. Lid edge
20. Cooking unit
21. Vapour discharge
22. Vapour passage zone
23. Supporting edge
24. Reinforcing structure
25. Encapsulating structure
26. Angle
27. Vertical direction

It will be understood that the present invention is not limited to the embodiments described above and that some adjustments or changes can be added to the described examples without changing the scope of the enclosed claims.

## Claims

1. A flange **1,** appropriate for being applied to an open circumferential edge **18** of a cooking pot **14,** wherein the flange **1** comprises a vapour passage **10** said vapour passage **10** is formed by a plurality of vapour passage channels 11, which vapour passage channels **11** substantially extend through the flange 1, wherein said vapour passage channels **11** extend substantially radially through the flange **1**, the channels being grouped into a vapour passage zone **22**, **characterised in that** the flange **1** comprises a means **8** for deflecting the vapour passage **10**, said means **8** for deflecting the vapour passage **10** is realized in the form of a hood **8,** which hood **8** extends essentially in an inclined, downward direction and comprises a hood base **9** that is provided above the vapour passage channels **11.**

2. The flange **1** according to any one of the previous claims , **characterized in that** the vapour passage channels **11** have a diameter of minimum 0.2 mm and maximum 12 mm.

3. The flange **1** according to any one of the previous claims, **characterized in that** the hood **8** describes an angle **26** that is smaller than 80° and that is preferably situated between 40° and 70°, more preferably between 45° and 65°, more preferably between 50° and 60°, and more preferably that is equal to approximately 55°.

4. The flange **1** according to any one of the previous claims, **characterized in that** the flange **1** comprises a lower ring part **2** and an upper ring part **3,** each comprising an average inner diameter and an average outer diameter, in which the average outer diameter of the upper ring part **3** is larger than the average outer diameter of the lower ring part **2.**

5. The flange **1** according to the previous claim 4, **characterized in that** the average inner diameter of the upper ring part **3** is larger than or equal to the average outer diameter of the lower ring part **2.**

6. The flange **1** according to any one of the previous claims, **characterized in that** the flange **1** is at least partially made of elastic material.

7. The flange **1** according to any one of the previous claims, **characterized in that** the flange **1** comprises two handles **7,** which handles extend diametrically, and in which said vapour passage **10** extends along a transverse direction.

8. An assembly **13** comprising a cooking pot and/or a pot lid, **characterized in that** the assembly **13** further comprises a flange **1** according to any one of the previous claims 1 to 7.

9. The assembly **13** according to the previous claim 8, **characterized in that** the assembly **13** comprises the cooking pot **13** and the flange **1**, which cooking pot **13** and flange **1** thereby form one integral part.

## Patentansprüche

1. Flansch **1**, der geeignet ist, an einen offenen umlaufenden Rand **18** eines Kochtopfs **14** angelegt zu werden, wobei der Flansch **1** einen Dampfdurchlass **10** umfasst, wobei der Dampfdurchlass **10** durch mehrere Dampfdurchlasskanäle **11** gebildet ist, wobei sich die Dampfdurchlasskanäle **11** im Wesentlichen durch den Flansch **1** erstrecken, wobei sich die Dampfdurchlasskanäle **11** im Wesentlichen radial durch den Flansch **1** erstrecken, wobei die Kanäle in eine Dampfdurchlasszone **22** gruppiert sind, **dadurch gekennzeichnet, dass** der Flansch **1** ein Mittel **8** zum Ablenken des Dampfdurchlasses **10** umfasst, wobei das Mittel **8** zum Ablenken des Dampfdurchlasses **10** in Form einer Haube **8** realisiert ist, wobei sich die Haube **8** im Wesentlichen in einer geneigten Abwärtsrichtung erstreckt und eine Haubenbasis **9** umfasst, die oberhalb der Dampfdurchlasskanäle **11** bereitgestellt ist.

2. Flansch **1** nach einem der vorhergehenden Ansprüche, **dadurch gekennzeichnet, dass** die Dampfdurchlasskanäle **11** einen Durchmesser von mindestens 0,2 mm und höchstens 12 mm aufweisen.

3. Flansch **1** nach einem der vorhergehenden Ansprüche, **dadurch gekennzeichnet, dass** die Haube **8** einen Winkel **26** beschreibt, der kleiner als 80° ist und der vorzugsweise zwischen 40° und 70° beträgt, bevorzugter zwischen 45° und 65°, bevorzugter zwischen 50° und 60°, und der bevorzugter gleich etwa 55° ist.

4. Flansch **1** nach einem der vorhergehenden Ansprüche, **dadurch gekennzeichnet, dass** der Flansch **1** einen unteren Ringteil **2** und einen oberen Ringteil **3** umfasst, die jeweils einen durchschnittlichen Innendurchmesser und einen durchschnittlichen Außendurchmesser umfassen, wobei der durchschnittliche Außendurchmesser des oberen Ringteils **3** größer als der durchschnittliche Außendurchmesser des unteren Ringteils **2** ist.

5. Flansch **1** nach dem vorhergehenden Anspruch 4, **dadurch gekennzeichnet, dass** der durchschnittliche Innendurchmesser des oberen Ringteils **3** größer als oder gleich dem durchschnittlichen Außendurchmesser des unteren Ringteils **2** ist.

6. Flansch **1** nach einem der vorhergehenden Ansprüche, **dadurch gekennzeichnet, dass** der Flansch **1** zumindest teilweise aus elastischem Material besteht.

7. Flansch **1** nach einem der vorhergehenden Ansprüche, **dadurch gekennzeichnet, dass** der Flansch **1** zwei Griffe **7** umfasst, wobei sich die Griffe diametral erstrecken und wobei sich der Dampfdurchlass **10** entlang einer Querrichtung erstreckt.

8. Anordnung **13,** einen Kochtopf und/oder einen Topfdeckel umfassend, **dadurch gekennzeichnet, dass** die Anordnung **13** ferner einen Flansch **1** nach einem der vorhergehenden Ansprüche 1 bis 7 umfasst.

9. Anordnung **13** nach dem vorhergehenden Anspruch 8, **dadurch gekennzeichnet, dass** die Anordnung **13** den Kochtopf **13** und den Flansch **1** umfasst, wobei der Kochtopf **13** und der Flansch **1** dadurch ein einstückiges Teil bilden.

## Revendications

1. Rebord **1**, approprié pour être appliqué sur un bord circonférentiel ouvert **18** d'un récipient de cuisson **14,** dans lequel le rebord **1** comprend un passage de vapeur **10** ledit passage de vapeur **10** est formé par une pluralité de voies de passage de vapeur 11, lesquelles voies de passage de vapeur **11** s'étendent sensiblement à travers le rebord **1**, dans lequel lesdites voies de passage de vapeur **11** s'étendent sensiblement radialement à travers le rebord **1,** les voies étant groupées en une zone de passage de vapeur **22, caractérisé en ce que** le rebord **1** comprend un moyen **8** pour dévier le passage de vapeur **10,** ledit moyen **8** pour dévier le passage de vapeur **10** est réalisé sous la forme d'un capot **8,** lequel capot **8** s'étend essentiellement dans une direction inclinée vers le bas et comprend une base de capot **9** qui est fournie au-dessus des voies de passage de vapeur **11**.

2. Rebord **1** selon l'une quelconque des revendications précédentes, **caractérisé en ce que** les voies de passage de vapeur **11** ont un diamètre de minimum 0,2 mm et maximum 12 mm.

3. Rebord **1** selon l'une quelconque des revendications précédentes, **caractérisé en ce que** le capot **8** décrit un angle **26** qui est inférieur à 80° et qui est de préférence situé entre 40° et 70°, de manière davantage préférée entre 45° et 65°, de manière davantage préférée entre 50° et 60°, et de manière davantage préférée qui est égal à approximativement 55°.

4. Rebord **1** selon l'une quelconque des revendications précédentes, **caractérisé en ce que** le rebord **1** comprend une partie annulaire inférieure **2** et une partie annulaire supérieure **3,** chacune comprenant un diamètre interne moyen et un diamètre externe moyen, dans lequel le diamètre externe moyen de la partie annulaire supérieure **3** est supérieur au diamètre externe moyen de la partie annulaire inférieure **2.**

5. Rebord **1** selon la revendication 4 précédente, **caractérisé en ce que** le diamètre interne moyen de la partie annulaire supérieure **3** est supérieur ou égal au diamètre externe moyen de la partie annulaire inférieure **2.**

6. Rebord **1** selon l'une quelconque des revendications précédentes, **caractérisé en ce que** le rebord **1** est au moins partiellement fait de matériau élastique.

7. Rebord **1** selon l'une quelconque des revendications précédentes, **caractérisé en ce que** le rebord **1** comprend deux poignées **7,** lesquelles poignées s'étendent diamétralement, et dans lequel ledit passage de vapeur **10** s'étend le long d'une direction transversale.

8. Ensemble **13** comprenant un récipient de cuisson et/ou un couvercle de récipient, **caractérisé en ce que** l'ensemble **13** comprend en outre un rebord **1** selon l'une quelconque des revendications 1 à 7 précédentes.

9. Ensemble **13** selon la revendication précédente 8, **caractérisé en ce que** l'ensemble **13** comprend le récipient de cuisson **13** et le rebord **1,** lesquels récipient de cuisson **13** et rebord **1** forment ainsi une partie d'un seul tenant.
